# EUROPEAN PATENT SPECIFICATION

(11) **EP 4 443 295 B1**
(45) Date of publication and mention of the grant of the patent: **23.09.2026**
(21) Application number: 21969395.9
(22) Date of filing: 29.12.2021
(51) Int. Cl.: G06F 8/65, G06F 9/52, G06F 11/14

(54) **INFORMATION PROCESSING METHOD AND APPARATUS AND SYSTEM**
INFORMATIONSVERARBEITUNGSVERFAHREN, -VORRICHTUNG UND -SYSTEM
PROCÉDÉ ET APPAREIL DE TRAITEMENT D'INFORMATIONS ET SYSTÈME

(43) Date of publication of application: 09.10.2024
(73) Proprietor: Yinwang Intelligent Technologies Co., Ltd., Shenzhen, Guangdong 518129 (CN)
(72) Inventor: ZHAO, Junxu, Shenzhen, Guangdong 518129 (CN)
(74) Representative: Gill Jennings & Every LLP
(86) International application number: PCT/CN2021/142378
(87) International publication number: WO 2023/123020

(56) References cited:
- CN-A- 1 862 503
- CN-A- 109 983 442
- CN-A- 112 363 748
- CN-A- 112 612 490
- US-A- 5 964 813
- US-A1- 2021 155 173
- US-A1- 2021 157 568

## Description

### TECHNICAL FIELD

This application relates to the field of communication technologies, and in particular, to an information processing method, apparatus, and system.

### BACKGROUND

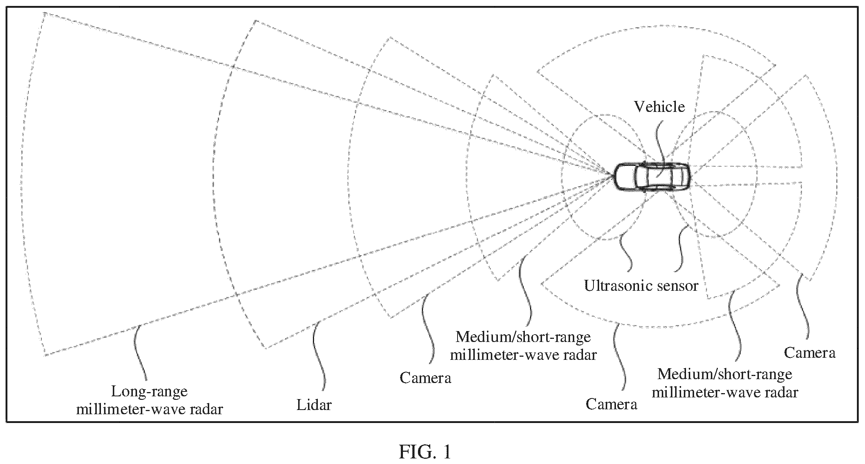

With continuous development of vehicle industries and continuous deepening of electric, autonomous, connected, and shared vehicles, functions of vehicles are becoming increasingly complex. There are more types and quantities of vehicle-mounted components disposed in a vehicle, to implement various functions of the vehicle. For example, as shown in FIG. 1, to implement a sensing function of a vehicle, a plurality of sensors are disposed in the vehicle, for example, at least one of an ultrasonic sensor, a millimeter-wave radar (which may be classified into a short-range millimeter-wave radar, a mid-range millimeter-wave radar, and a long-range millimeter-wave radar), a millimeter-wave radar, a camera, or a lidar.

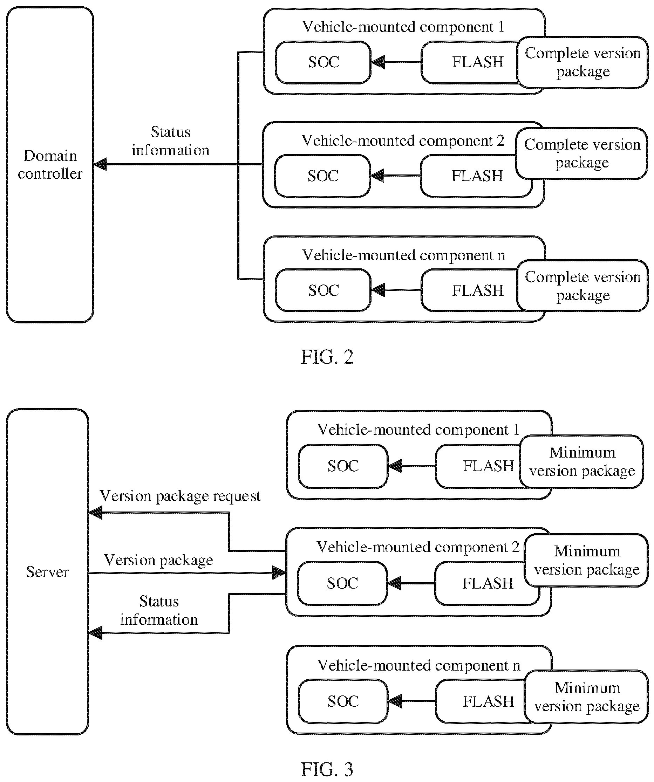

However, as vehicle functions are updated, software and/or firmware of a vehicle-mounted component need to be upgraded to adapt the vehicle-mounted component to the vehicle functions. As shown in FIG. 2, in some technical solutions, a complete version package (namely, a data packet that includes all information required for upgrading software and/or firmware of a vehicle-mounted component) is stored in a flash (FLASH) memory of each vehicle-mounted component (namely, vehicle-mounted components 1 to n), so that a system on chip (system on chip, SOC) of the vehicle-mounted component can execute the complete version package in the flash memory, to upgrade the software and/or firmware of the vehicle-mounted component (where for example, an SOC of the vehicle-mounted component 1 may execute the complete version package in the flash memory to upgrade software and/or firmware of the vehicle-mounted component 1). After successfully executing the complete version package, the vehicle-mounted component may further report status information of the vehicle-mounted component to a corresponding domain controller in a vehicle, where the status information indicates that the vehicle-mounted component has successfully executed the complete version package. In this solution, a flash memory needs to be disposed in each vehicle-mounted component, resulting in high costs of the vehicle-mounted component. In addition, a software/firmware upgrade process of the vehicle-mounted component is complex and time-consuming.

As shown in FIG. 3, in some other technical solutions, a minimum version package (namely, a data packet that includes initialization information (for example, initialization information of a communication interface) required for upgrading software and/or firmware of a vehicle-mounted component) is stored in a flash memory of each vehicle-mounted component (namely, vehicle-mounted components 1 to n), to enable a communication capability of the vehicle-mounted component, so that the vehicle-mounted component can send a version package request to a server, receive a complete version package from the server, execute the corresponding complete version package, and upgrade software and/or firmware of the vehicle-mounted component. In addition, after successfully executing the complete version package, the vehicle-mounted component can further report status information of the vehicle-mounted component to the server, where the status information indicates that the vehicle-mounted component has successfully executed the complete version package. For example, after a vehicle-mounted component 2 receives a complete version package, an SOC of the vehicle-mounted component 2 executes the complete version package, upgrades software and/or firmware of the vehicle-mounted component 2, and reports corresponding status information to the server. In this solution, the server needs to establish communication connections to all of the vehicle-mounted components. This consumes a large amount of communication resources, causes high costs of the vehicle-mounted components, and makes a software/firmware upgrade process of the vehicle-mounted components complex and time-consuming.

Therefore, how to reduce costs of a vehicle-mounted component and reduce upgrade duration of the vehicle-mounted component is an urgent problem to be resolved.

US2021155173A1 discloses a vehicle master device that includes a rewrite target specifying unit that is configured to identify a plurality of rewrite target ECUs, a rewrite completion determination unit that is configured to determine whether a program rewrite is completed for all the plurality of rewrite target ECUs specified by the rewrite target specifying unit, an activation executable determination unit that is configured to determine whether activation is executable when the rewrite completion determination unit determines that the program rewrite is completed for all the plurality of rewrite target ECUs, and an activation request instruction unit that is configured to instruct all the plurality of rewrite target ECUs at the same time to perform the activation when the activation executable determination unit determines that activation is executable.

US2021157568A1 discloses a center device that manages data to be written into electronic control units mounted on a vehicle and includes an update data storage storing update data for a target device being a target of data update among the electronic control units, a vehicle information storage storing, together with type of the vehicle, vehicle related information, and a device related information storage storing update data related information. Based on information stored in the device related information storage and the vehicle information storage, the center device generates specification data including device type, attribute, the update data related information of the target device, and information indicating rewrite environment related to the data update of the target device, and generates a distribution package including the update data and the specification data.

### SUMMARY

This application provides an information processing method, apparatus, and computer-readable medium, to reduce costs of a vehicle-mounted component and reduce time consumed for upgrading the vehicle-mounted component.

According to a first aspect, an embodiment of this application provides an information processing method as set out in appended claim 1.

It may be understood that the first node and the at least one second node are a plurality of vehicle-mounted components in a vehicle, and the vehicle-mounted component may be, for example, any one of a domain controller, an electronic control unit (electronic control unit, ECU), a vehicle-mounted terminal, or a sensor in the vehicle.

In this embodiment of this application, the first version package is stored in the storage of the first node, so that the first node can write the first version package into the memory of the at least one second node. In addition, in this embodiment of this application, the memory of the second node is an internal storage that is in the second node and that directly exchanges data with a processor and has a read/write function. Therefore, an external storage may not be disposed in the second node to store the first version package, so that costs of the second node can be effectively reduced. In addition, the second node accesses a memory quickly and the second node receives the first version package by using the memory, so that an upgrade process of a vehicle-mounted component can be effectively simplified, to effectively reduce upgrade duration of the second node (namely, the vehicle-mounted component).

In the first aspect, that the first node writes the first version package into a memory of the at least one second node includes: The first node writes the first version package into storage space corresponding to a target memory address of the at least one second node. In this design, the first node directly writes the first version package into the storage space corresponding to the target memory address of the at least one second node, so that the at least one second node can quickly read the first version package. This can effectively improve upgrade efficiency of the second node. The target memory address of the at least one second node is obtained by the first node in advance, or is sent by the at least one second node to the first node before the first node writes the first version package into the at least one second node. This is not limited in embodiments of this application.

In a possible design, the attribute information may include but is not limited to one or more of a node function, a node location, a quantity of nodes, a node type, or node performance. In this design, one or more of the node function, the node location, the quantity of nodes, the node type, or the node performance of the second node is associated with the first version package, so that a version package written by the first node into the second node is adapted to the second node.

In a possible design, the first version package corresponds to a first function of the at least one second node. The method further includes: The first node executes a second version package corresponding to a second function, where the second function is associated with the first function.

It may be understood that, in this embodiment of this application, "the second function is associated with the first function" means that implementation of the first function is a necessary condition for implementation of the second function. For example, the second function is an autonomous driving function, the first function is a distance measurement function, and implementation of the distance measurement function is a necessary condition for implementation of the autonomous driving function.

In this design, when implementation of the first function is a necessary condition for implementation of the second function, the at least one second node executes the first version package corresponding to the first function, and the first node executes the second version package corresponding to the second function, so that the first node and the at least one second node can jointly implement the second function.

In a possible design, when the at least one second node executes the first version package, the first node executes the second version package corresponding to the second function.

It may be understood that a case in which the at least one second node executes the first version package includes at least one stage of the following: a process in which the at least one second node executes the first version package, before the at least one second node executes the first version package, or after the at least one second node executes the first version package. In other words, before the at least one second node executes the first version package, the first node may execute the second version package corresponding to the second function; in the process in which the at least one second node executes the first version package, the first node may execute the second version package corresponding to the second function; or after the at least one second node executes the first version package, the first node may execute the second version package corresponding to the second function.

In this design, when the at least one second node executes the first version package, the first node executes the second version package corresponding to the second function, so that the first node and the at least one second node can jointly implement the second function.

In a possible design, the first node may be any node in the at least one second node. The method further includes: The first node executes the first version package. In this design, when both the first node and the at least one second node are associated with the first version package, the first node also executes the first version package, so that the first node can also implement the first function.

In a possible design, that a first version package is stored in a storage of a first node includes: The first node receives a third version package, upgrades the third version package to obtain the first version package, and stores the first version package. In this design, after receiving the third version package, the first node may upgrade the third version package to obtain the first version package, and store the first version package, so that the first version package written by the first node into the at least one second node is an upgraded version package, and the at least one second node does not need to upgrade the first version package. This effectively simplifies an upgrade process of the at least one second node, to effectively reduce upgrade duration of the second node.

In a possible design, before the first node writes the first version package into a memory of the at least one second node, the method further includes: The first node writes the first version package into the memory of the at least one second node based on first information of the at least one second node, where the first information indicates that the at least one second node is in a started state. In this design, the first node writes the first version package into the at least one second node only when determining that the at least one second node is in the started state. This can effectively improve a probability of successfully writing the first version package by the first node into the at least one second node.

The first information may be sent by at least one second node to the first node, or the first information may be information obtained by the first node in advance. The pre-obtained information may include at least one of a bus type, a communication identifier, or a state memory address of the at least one second node. For example, the bus type may be, for example, a general purpose input/output (general purpose input/output, GPIO) bus, an Ethernet (Ethernet, ETH) bus, or a controller area network (controller area network, CAN) bus. The communication identifier may be, for example, any one of a controller area network identifier (controller area network ID, CAN ID), an interworking protocol (interworking protocol, IP) address, a media access control (media access control, MAC) address, or a port number. The state memory address may be, for example, a register address indicating a state of the second node.

In a possible design, before the first node writes the first version package into a memory of the at least one second node, the method may further include: The first node performs a first operation based on second information of the at least one second node. The second information indicates that the at least one second node is in a failed state. The first operation may include but is not limited to at least one of the following: reporting exception information corresponding to the failed state to a controller in a vehicle or a server; controlling a prompt apparatus to output prompt information, where the prompt information indicates that a function of the at least one second node fails or is degraded; and adjusting a sensing policy of a vehicle, where the sensing policy indicates a manner in which the vehicle recognizes a target object or an environment. In this design, when determining that the at least one second node is in the failed state, the first node may perform a corresponding operation (for example, reporting the exception information, outputting the prompt information, or adjusting the sensing policy of the vehicle), so that a user can perceive a function change of the at least one second node, or a vehicle-mounted controller can timely adjust the sensing policy of the vehicle. In this way, driving behavior of the vehicle matches a function of the at least one second node, to effectively improve driving safety of the vehicle.

In a possible design, that the first node writes the first version package into a memory of the at least one second node includes: When determining that duration in which the first version package is stored in the storage of the first node exceeds first preset duration, the first node writes the first version package into the memory of the at least one second node. In this design, the first node does not need to obtain a status of the at least one second node, and may write the first version package into the memory of the at least one second node only when the duration in which the first version package is stored in the storage of the first node exceeds the first preset duration. This can simplify a process of obtaining the first version package by the at least one second node, to reduce upgrade duration of the at least one second node.

In a possible design, the first node receives notification information from the at least one second node within second preset duration, where the notification information indicates that the at least one second node has successfully executed the first version package. Alternatively, when receiving no notification information from the at least one second node within second preset duration, the first node determines that the at least one second node fails to execute the first version package or a communication link between the first node and the at least one second node is faulty. In this design, the first node may determine, based on the notification information of the at least one second node received within the second preset duration, whether the at least one second node successfully executes the first version package.

According to a third aspect, an embodiment of this application further provides an information processing apparatus as set out in appended claim 11.

According to a fourth aspect, an embodiment of this application further provides a computer-readable storage medium as set out in appended claim 12.

It should be understood that, for beneficial effects in the second aspect, the third aspect and the fourth aspect, refer to related descriptions in the first aspect. Details are not described herein again.

### BRIEF DESCRIPTION OF DRAWINGS

FIG. 1 is a schematic diagram of a vehicle sensing system according to an embodiment of this application;
FIG. 2 is a schematic diagram 1 of a scenario according to an embodiment of this application;
FIG. 3 is a schematic diagram 2 of a scenario according to an embodiment of this application;
FIG. 4 is a schematic diagram of a system architecture to which an embodiment of this application is applicable;
FIG. 5 is a schematic diagram 1 of a scenario to which an embodiment of this application is applicable;
FIG. 6 is a schematic diagram 2 of a scenario to which an embodiment of this application is applicable;
FIG. 7 is a schematic flowchart of an information processing method according to an embodiment of this application;
FIG. 8 is a schematic flowchart in which a first node and a second node separately execute a version package corresponding to an associated function according to an embodiment of this application;
FIG. 9 is a schematic flowchart of another information processing method according to an example not forming part of the invention;
FIG. 10 is a schematic diagram of a structure of an information processing apparatus according to an embodiment of this application;
FIG. 11 is a schematic diagram of another structure of an information processing apparatus according to an embodiment of this application;
FIG. 12 is a schematic diagram of another structure of an information processing apparatus according to an example not forming part of the invention; and
FIG. 13 is a schematic diagram of a structure of a chip system according to an embodiment of this application.

### DESCRIPTION OF EMBODIMENTS

This application provides an information processing method, apparatus, and system, to reduce costs of a vehicle-mounted component, and reduce upgrade duration of the vehicle-mounted component. The method and the apparatus are based on a same technical concept. Because a problem-resolving principle of the method is similar to a problem-resolving principle of the apparatus, mutual reference may be made to implementation of the apparatus and the method. Details are not described herein again.

In the solutions provided in embodiments of this application, a first version package is stored in a storage of a first node, and the first version package corresponds to attribute information of at least one second node, so that the first node can write the first version package into a memory of the at least one second node. It may be understood that the memory of the second node is an internal storage that is in the second node and that directly exchanges data with a processor and has a read/write function. Therefore, an external storage may not be disposed in the second node to store the first version package, so that costs of the second node can be effectively reduced. In addition, the second node accesses a memory quickly and the second node receives the first version package by using the memory, so that an upgrade process of the vehicle-mounted component can be effectively simplified, to effectively reduce the upgrade duration of the second node (namely, the vehicle-mounted component).

It should be noted that a main difference between the internal storage and the external storage of the second node is a difference between volatility, non-volatility, and performance. Descriptions are separately provided below.

### Internal storage

The internal storage is briefly referred to as a memory. The internal storage has a volatile feature. To be specific, data stored in the internal storage is lost when a second node is powered off. In addition, the internal storage directly exchanges data with a processor, so that a read/write speed of the internal storage is fast. The internal storage includes a main storage of the second node and a cache located between the processor and the main storage.

The main storage is a storage that directly interacts with the processor, performs an operation, and sends a data operation instruction, and is also referred to as a main memory. The main storage may include a random access memory (random access memory, RAM) and a read-only memory (read-only memory, RAM). The RAM is a read/write storage that can store (write) and access (read) data. For example, the RAM may be configured to store information that is currently being used by the processor, and the information may be data or program code. The ROM is a kind of read-only memory, and stores data stably. After a power failure, the stored data does not change. Because of a simple structure and convenient reading, the ROM is often configured to store various fixed programs and data. For example, the ROM may be configured to store an initialization program of an input/output interface.

The cache is a cache for high-speed data processing. The cache may be configured to store instructions and data that are frequently accessed by the processor during operation, so that the processor can retrieve duplicate information from the cache more quickly, without a need to access the information from the main storage.

Therefore, in embodiments of this application, a memory that is in the second node and that is configured to write a first version package and an internal storage that directly exchanges data with the processor and has a read/write function may be RAMs or caches.

### External storage

On the contrary, the external storage has a non-volatile feature, and the external storage is also referred to as a non-volatile storage or an auxiliary storage. A processor cannot directly read data from or write data into the external storage, and the processor needs to indirectly read the data from or write the data into the external storage by using a main storage (for example, a RAM), so that a read or write speed of the external storage is slow. The external storage may be, for example, any one of a mechanical hard disk, a solid-state drive, a magnetic tape, a finger storage, an optical disc, or a flash memory.

The following describes some terms in this application, to help a person skilled in the art have a better understanding.
(1) Vehicle-mounted components are various components for implementing vehicle functions. For example, the vehicle-mounted component may be, for example, any one of a controller, an ECU, a vehicle-mounted terminal, or a sensor in a vehicle.
(2) A version package may be understood as data for updating software and/or firmware of a vehicle-mounted component.
(3) A first node may be understood as a vehicle-mounted component for writing a version package into a second node associated with the version package in embodiments of this application. For example, the first node may be any one of a controller, an ECU, a vehicle-mounted terminal, or a sensor. This is not specifically limited in embodiments of this application.
(4) A second node may be understood as a vehicle-mounted component whose software and/or firmware needs to be upgraded in embodiments of this application, and may receive, by using a memory, a version package written by a first node. Alternatively, a second node is a vehicle-mounted component that may run a ROM to obtain a version package. For example, the second node may be any one of a controller, an ECU, a vehicle-mounted terminal, or a sensor.
(5) A status of a second node. In embodiments of this application, the status of the second node may be a started state or a failed state. The "started state" may be understood as a state in which the second node is powered on, and the second node establishes a communication connection to a first node and waits to receive a version package. The "failed state" may be understood as an unconnected state (that is, a communication link is faulty, or the first node and the second node do not establish a communication connection) or a start exception state (for example, a second node initialization exception (for example, waiting timeout) or a version package exception).
(6) In embodiments of this application, "at least one" means one or more, and "at least two" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c, where a, b, and c may be singular or plural. In addition, it should be understood that, in the descriptions of this application, terms such as "first" and "second" are only for distinction and description, but cannot be understood as an indication or implication of relative importance, or as a limitation on an order.

The following describes a system architecture to which an embodiment of this application is applicable with reference to the accompanying drawings.

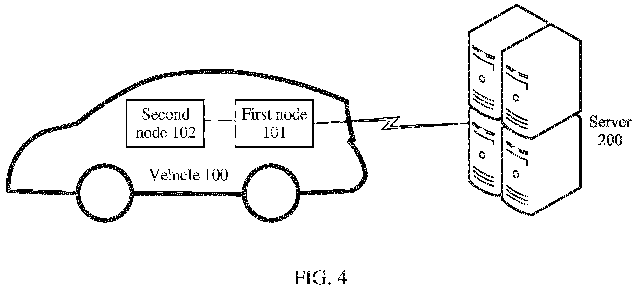

FIG. 4 shows a system architecture to which an embodiment of this application is applicable. The system includes a vehicle 100 and a server 200.

The vehicle 100 includes a first node 101 and a second node 102. For example, the first node 101 may be any one of a vehicle-mounted terminal, a domain controller, an ECU, or a sensor of a vehicle. Similarly, the second node 102 may also be any one of a vehicle-mounted terminal, a domain controller, an ECU, or a sensor of a vehicle.

The sensor may be, for example, any one of a lidar, a millimeter-wave radar (for example, the long-range millimeter-wave radar, or the medium/short-range millimeter-wave radar in FIG. 1), an ultrasonic sensor, or a photographing apparatus (for example, a camera in FIG. 1). This is not specifically limited in embodiments of this application.

The photographing apparatus may be configured to obtain image information of an environment in which the vehicle is located. Currently, a plurality of cameras may be installed on the vehicle to obtain information from more angles. The photographing apparatus in embodiments of this application may have one or more functions such as image capture, image processing, target recognition, or vehicle control signal setting.

The lidar stands for a light laser detection and ranging (light laser detection and ranging, LiDAR) system, and mainly includes a transmitter, a receiver, and a signal processing unit. The transmitter is a laser emitting mechanism in the lidar. Laser light emitted by the transmitter irradiates to a target object and is reflected by the target object, so that the reflected light is converged to the receiver through a lens unit. The signal processing unit is responsible for controlling transmission of the transmitter, processing a signal received by the receiver, and calculating information such as a location, a speed, a distance, and/or a size of the target object.

The millimeter-wave radar can measure, by using a millimeter wave as a detection medium, a distance, an angle, or a relative speed between the millimeter-wave radar and an object to be measured. The millimeter-wave radar may be classified into a long-range radar (long-range radar, LRR), a mid-range radar (mid-range radar, MRR), and a short-range radar (short-range radar, SRR) based on a detection distance. The LRR is mainly applicable to scenarios such as active cruise and braking assistance. The LRR does not have a high requirement on a detection angular width, indicating a low requirement on a 3 dB beam width of an antenna. The MRR/SRR is mainly applicable to scenarios such as automatic parking, lane changing assist, and blind spot detection. The MRR/SRR has a high requirement on a detection angular width, indicating a high requirement on a 3 dB beam width of an antenna and a low side lobe level of the antenna. A beam width is used to ensure a detectable angular range, and the low side lobe is used to reduce clutter energy reflected by the ground, reduce a false alarm probability, and ensure driving safety. The LRR may be installed in the front of a vehicle body, and the MRR/SRR may be installed in four corners of the vehicle. The LRR and the MRR/SRR may be jointly used to achieve 360-degree coverage around the vehicle body. The millimeter-wave radar may include a housing, and at least one built-in printed circuit board (printed circuit board, PCB) that may include, for example, a power supply PCB and a radar PCB is disposed in the housing. The power supply PCB may provide a voltage for use in the radar, and may also provide an interface and safety function for communication with another device. The radar PCB may transmit, receive, and process a millimeter wave signal, and is integrated with a component for processing a millimeter wave signal and antennas for transmitting and receiving a millimeter wave signal (a transmit antenna Tx and a receive antenna Rx). The antenna may be formed in a microstrip array manner on the back of the radar PCB for transmitting and receiving a millimeter wave.

The ultrasonic sensor, also known as an ultrasonic radar, is a sensing apparatus that performs detection by using an ultrasonic wave. A working principle of the ultrasonic sensor is to transmit an ultrasonic wave outward by using an ultrasonic transmitting apparatus, receive, by using a receiving apparatus, an ultrasonic wave reflected back by an obstacle, and measure a distance based on a time difference of receiving the reflected ultrasonic wave. Currently, the distance measured by the ultrasonic sensor may be used to indicate a distance from a vehicle body to the obstacle, to assist in parking or reduce an unnecessary collision. It should be understood that the foregoing sensors are merely examples for describing a sensor that may be configured on a vehicle in embodiments of this application instead of any limitation. In another embodiment, the sensors may include but are not limited to the foregoing examples.

It may be understood that the architecture shown in FIG. 4 may be applied to a plurality of communication scenarios, for example, the 5th generation (the 5th generation, 5G) communication system, a future 6th generation communication system and another evolved communication system, a long term evolution (long term evolution, LTE) communication system, vehicle to everything (vehicle to everything, V2X), long term evolution-vehicle (LTE-vehicle, LTE-V), vehicle to vehicle (vehicle to vehicle, V2V), internet of vehicles, machine type communication (machine type communication, MTC), internet of things (internet of things, IoT), long term evolution-machine to machine (LTE-machine to machine, LTE-M), and machine to machine (machine to machine, M2M). This is not limited in this application.

The server 200 may establish a communication connection to the first node 101 through a conventional internet protocol (internet protocol, IP) network, to perform communication interaction. Alternatively, the first node 101 may establish a communication connection to the server 200 through a mobile communication network (including an access network and a core network), to implement communication interaction. Alternatively, the first node 101 may establish, by using at least one relay device, a communication connection to the server 200 through a mobile communication network, to implement communication interaction. For example, when the first node 101 is an ECU in the V2X communication scenario, the first node 101 may successively pass through the following relay devices: a domain controller (domain controller, DC), a gateway (gateway, GW), and a telematics box (telematics box, T-Box), and establish a communication connection to the server 200.

In a possible implementation, the first node 101 may communicate and interact with the server 200 to obtain and store a first version package, where the first version package corresponds to attribute information of the second node 102, so that the first node 101 may write the first version package into a memory of the second node 102. It may be understood that the memory of the second node 102 is an internal storage that is in the second node 102 and that directly exchanges data with a processor and has a read/write function. Therefore, an external storage may not be disposed in the second node 102 to store the first version package, so that costs of the second node 102 can be effectively reduced. In addition, the second node 102 accesses a memory quickly and the second node 102 receives the first version package by using the memory, so that an upgrade process of the second node 102 (namely, a vehicle-mounted component) can be effectively simplified, to effectively reduce upgrade duration of the second node 102 (namely, the vehicle-mounted component).

It may be understood that, for the second node of the vehicle 100 in FIG. 4, only one second node is used as an example. In another embodiment, there may be a plurality of second nodes. A quantity of second nodes is not specifically limited in embodiments of this application.

The following describes a scenario to which embodiments of this application are applicable with reference to specific examples.

### Scenario 1

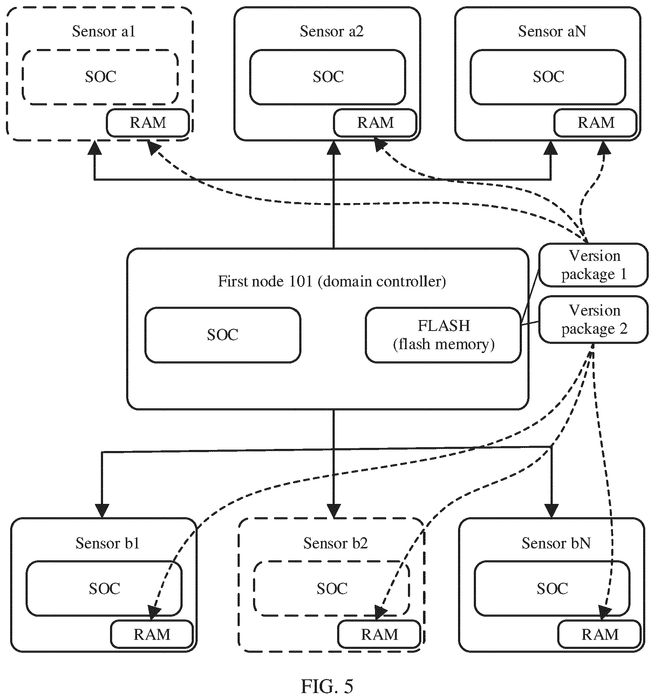

Refer to FIG. 5. FIG. 5 is a schematic diagram 1 of a scenario to which an embodiment of this application is applicable. For example, in FIG. 5, the first node 101 is a domain controller, and the second node 102 is sensors a1 to aN and sensors b1 to bN. The first node 101 may manage or maintain a version package 1 and a version package 2. For example, the version package 1 and the version package 2 may be stored in a flash memory of the first node 101. The version package 1 corresponds to attribute information of the sensors a1 to aN, so that the first node 101 may write the version package 1 into memories (for example, RAMs) of the sensors a1 to aN, and the sensors a1 to aN execute the version package 1, to update software and/or firmware of the sensors a1 to aN. In addition, the version package 2 corresponds to attribute information of the sensors b1 to bN, so that the first node 101 may write the version package 2 into memories (for example, RAMs) of the sensors b1 to bN, and the sensors b1 to bN execute the version package 2, to update software and/or firmware of the sensors b1 to bN.

The memories of the sensors a1 to aN and the memories of the sensors b1 to bN each are an internal storage (for example, a RAM) that is in the sensors a1 to aN and the sensors b1 to bN and that directly exchanges data with the processor and has a read/write function. Therefore, an external storage may not be disposed in the sensors a1 to aN and the sensors b1 to bN to store the first version package, so that costs of the sensors a1 to aN and the sensors b1 to bN can be effectively reduced. In addition, the sensors a1 to aN and the sensors b1 to bN access a memory quickly, and the sensors a1 to aN and the sensors b1 to bN receive the first version package by using the memory, so that an upgrade process of the sensors a1 to aN and the sensors b1 to bN can be effectively simplified, to effectively reduce upgrade duration of the sensors a1 to aN and the sensors b1 to bN. In addition, the sensors a1 to aN and the sensors b1 to bN do not need to request a corresponding version package from the server 200, so that communication costs can be effectively reduced.

### Scenario 2

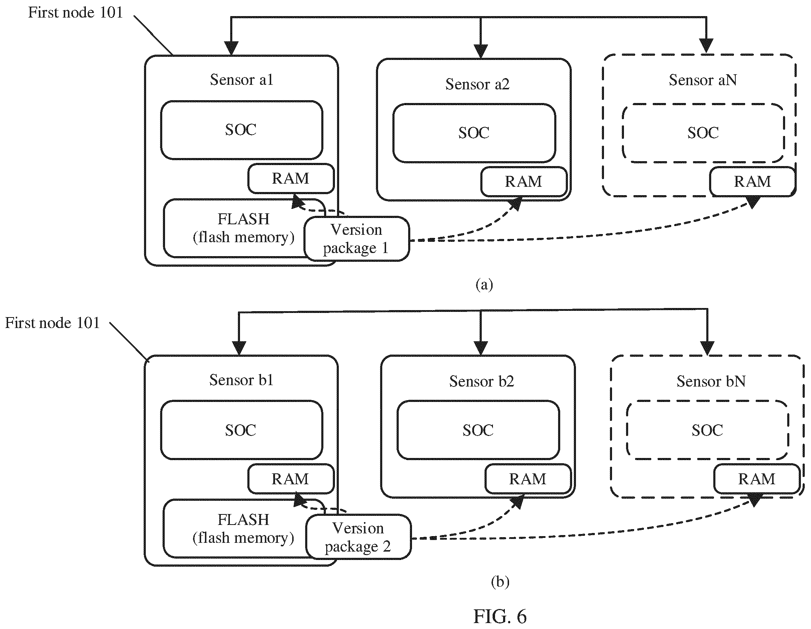

Refer to FIG. 6. FIG. 6 is a schematic diagram 2 of a scenario to which an embodiment of this application is applicable. For example, in FIG. 6, both the first node 101 and the second node 102 are a sensor.

For example, in (a) in FIG. 6, the first node 101 is a sensor a1, and the second node 102 is sensors a2 to aN. A version package 1 corresponds to attribute information of sensors a1 to aN. The sensor a1 (namely, the first node 101) may be configured to maintain or manage the version package 1. For example, the version package 1 is stored in a flash memory of the sensor a1, and the sensor a1 may write the version package 1 into memories (for example, RAMs) of the sensors a2 to aN, so that the sensors a2 to aN execute the version package 1, to update software and/or firmware of the sensors a2 to aN. The memories of the sensors a2 to aN each are an internal storage (for example, a RAM) that is in the sensors a2 to aN and that directly exchanges data with the processor and has a read/write function. Therefore, the first version package is stored in external storages of the sensors a2 to aN, so that costs of the sensors a2 to aN can be effectively reduced. In addition, the sensors a2 to aN access a memory quickly, and the sensors a2 to aN receive the first version package by using the memory, so that an upgrade process of the sensors a2 to aN can be effectively simplified, to effectively reduce upgrade duration of the sensors a2 to aN. In addition, the sensors a2 to aN do not need to request a corresponding version package from the server 200, so that communication costs can be effectively reduced.

For example, in (b) in FIG. 6, the first node 101 is a sensor b1, and the second node 102 is sensors b2 to bN. A version package 2 corresponds to attribute information of sensors b1 to bN. The sensor b1 (namely, the first node 101) may be configured to maintain or manage the version package 2. For example, the version package 2 is stored in a flash memory of the sensor b1, and the sensor b1 may write the version package 2 into memories (for example, RAMs) of the sensors b2 to bN, so that the sensors b2 to bN execute the version package 2, to update software and/or firmware of the sensors b2 to bN. The memories of the sensors b2 to bN each are an internal storage (for example, a RBM) that is in the sensors b2 to bN and that directly exchanges data with the processor and has a read/write function. Therefore, the first version package is stored in external storages of the sensors b2 to bN, so that costs of the sensors b2 to bN can be effectively reduced. In addition, the sensors b2 to bN access a memory quickly, and the sensors b2 to bN receive the first version package by using the memory, so that an upgrade process of the sensors b2 to bN can be effectively simplified, to effectively reduce upgrade duration of the sensors b2 to bN. In addition, the sensors b2 to bN do not need to request a corresponding version package from the server 200, so that communication costs can be effectively reduced.

The following describes the information processing method provided in embodiments of this application with reference to specific accompanying drawings.

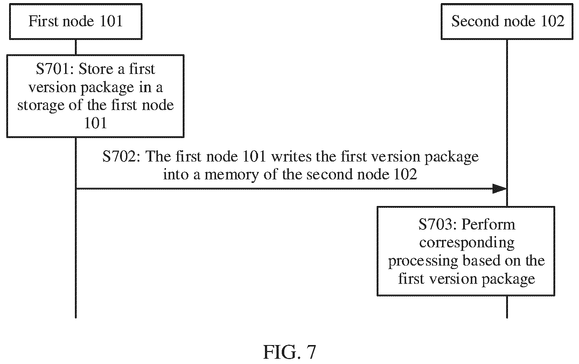

FIG. 7 is a schematic flowchart of an information processing method according to an embodiment of this application. The method may be applied to the system architecture shown in FIG. 4. The method includes the following steps.

S701: A first node 101 stores a first version package in a storage of the first node 101.

The first version package corresponds to attribute information of at least one second node. In the embodiment shown in FIG. 7, an example in which the at least one second node is a second node 102 is used. In other words, the first version package corresponds to attribute information of the second node 102.

It may be understood that the first node 101 and the second node 102 are a plurality of vehicle-mounted components in a vehicle 100, and the vehicle-mounted component may be, for example, any one of a domain controller, an electronic control unit (electronic control unit, ECU), a vehicle-mounted terminal, or a sensor in the vehicle.

In a possible implementation, the attribute information of the at least one second node includes one or more of a node function, a node location, a quantity of nodes, a node type, or node performance. In other words, in this embodiment of this application, one or more of the node function, the node location, the quantity of nodes, the node type, or the node performance of the at least one second node may be associated with the first version package, so that a version package written by the first node into the second node is adapted to the second node.

It may be understood that the node function is a function of the at least one second node, for example, may be at least one of distance measurement, angle measurement, speed measurement, image capture, or target recognition. The node location is a setting location of the at least one second node, for example, may be a setting location (for example, left front of the vehicle, or right front of the vehicle) of the at least one second node in the vehicle. The quantity of nodes is a quantity of second nodes in the at least one second node. For example, the quantity of nodes may be 4 or 2. This is not specifically limited in embodiments of this application. The node type is a type of a second node in the at least one second node. For example, the node type may include at least one of a sensor, a controller, a vehicle-mounted terminal, or an ECU; or the node type may include at least one of a subtype of a sensor, a subtype of a controller, a subtype of a vehicle-mounted terminal, or a subtype of an ECU. The node performance is a performance parameter of a function associated with a second node in the at least one second node, for example, may be at least one of a detection distance of a distance measurement function, a detection angle of an angle measurement function, or a capture range of an image capture function.

It can be understood that the subtype of the sensor is a type of the sensor, for example, the sensor may be a radar and/or a photographing apparatus. The subtype of the controller is a type of the controller, for example, the controller may be a domain controller (for example, a cockpit domain controller or an autonomous driving domain controller) or a vehicle control unit. The subtype of the vehicle-mounted terminal is a type of the vehicle-mounted terminal, for example, the vehicle-mounted terminal is a Wi-Fi terminal or a Bluetooth terminal. The subtype of the ECU is a type of the ECU, for example, the ECU is a chassis ECU, or a seat ECU.

It may be understood that the ECU includes at least one of integrated circuits such as a microcontroller, a storage, an input/output interface, an analog-to-digital converter, a shaping circuit, or a driver circuit, and may be configured to control a component of the vehicle. One controller may communicate and interact with a plurality of ECUs to indirectly control a plurality of components of the vehicle. For example, the controller is a cockpit domain controller, and the ECU is a seat ECU. The cockpit domain controller may send a control packet to the seat ECU, so that the seat ECU controls a seat to be lifted and lowered.

Example 1: As shown in Table 1, the attribute information of the at least one second node includes the node function, the quantity of nodes, and the node type. For example, a node type of the second node in the at least one second node is a sensor, a quantity of second nodes in the at least one second node is 2, a node function of the second node in the at least one second node is at least one of the angle measurement function, the distance measurement function, or a speed measurement function. In other words, the two sensors are configured to implement at least one of the angle measurement function, the distance measurement function, or the speed measurement function. Correspondingly, the first version package corresponding to the attribute information of the at least one second node may include a version package 1, and the version package 1 may be used to update at least one of the angle measurement function, the distance measurement function, or the speed measurement function of the two sensors. Alternatively, the first version package may include a version package 1, a version package 2, and a version package 3. The version package 1 may be used to update the angle measurement function of the two sensors, the version package 2 may be used to update the distance measurement function of the two sensors, and the version package 3 may be used to update the speed measurement function of the two sensors.

**Table 1**

| Attribute information | | |
|---|---|---|
| Quantity of nodes | Node type | Node function |
| 2 | Sensor | At least one of an angle measurement function, a distance measurement function, or a speed measurement function |

It can be learned from Example 1 that the first version package corresponding to the attribute information of the at least one second node may be used to simultaneously or separately update one or more node functions of second nodes of a same type.

Example 2: As shown in Table 2, the attribute information of the at least one second node includes the node function, the quantity of nodes, and the node type. For example, a quantity of second nodes in the at least one second node is 2, a node type of the second node in the at least one second node is a radar and a photographing apparatus, and a node function of the second node in the at least one second node includes an angle measurement function, a distance measurement function, and a speed measurement function of the radar, and an image capture function and/or a target recognition function of the photographing apparatus. The first version package corresponding to the attribute information of the at least one second node may include a version package 1 and a version package 2. The version package 1 may be used to update at least one of the angle measurement function, the distance measurement function, or the speed measurement function of the radar. The version package 2 may be used to update the image capture function and/or the target recognition function of the photographing apparatus. Alternatively, the first version package corresponding to the attribute information of the at least one second node may include a version package 1. The version package 1 may be used to update at least one of the angle measurement function, the distance measurement function, or the speed measurement function of the radar, and is used to update the image capture function and/or the target recognition function of the photographing apparatus.

**Table 2**

| Attribute information | | |
|---|---|---|
| Quantity of nodes | Node type | Node function |
| 2 | Radar | At least one of an angle measurement function, a distance measurement function, or a speed measurement function |
| | Photographing apparatus | Image capture function and/or target recognition function |

Example 3: As shown in Table 3, the attribute information of the at least one second node includes the node function, the quantity of nodes, the node location, and the node type. For example, a quantity of second nodes in the at least one second node is 6. The node type includes a millimeter-wave radar and a lidar. In other words, the at least one second node includes four millimeter-wave radars and two lidars, installation locations (namely, node locations) of the four millimeter-wave radars in the vehicle 100 are respectively left front, left rear, right front, and right rear, and installation locations (namely, node locations) of the two lidars in the vehicle 100 are respectively forward and lateral. A node function of the four millimeter-wave radars is short-range detection, and a node function of the two lidars is long-range detection. The first version package corresponding to the attribute information of the at least one second node may include a version package 1, and the version package 1 may be used to update a short-range detection function of the four millimeter-wave radars, and to update a long-range detection function of the two lidars. Alternatively, the first version package corresponding to the attribute information of the at least one second node may include a version package 1 and a version package 2. The version package 1 may be used to update a short-range detection function of the four millimeter-wave radars, and the version package 2 may be used to update a long-range detection function of the two lidars.

**Table 3**

| Attribute information | | | |
|---|---|---|---|
| Quantity of nodes | Node type | Node location | Node function |
| 4 | Millimeter-wave radar | Left front, left rear, right front, and right rear | Short-range detection |
| 2 | Lidar | Forward and lateral | Long-range detection |

It can be learned from Example 2 and Example 3 that the first version package corresponding to the attribute information of the at least one second node may be used to simultaneously or separately update one or more node functions of second nodes of different types.

Example 4: As shown in Table 4, the attribute information of the at least one second node includes the node function, the node type, and the node performance. For example, a quantity of second nodes in the at least one second node is 4, and the node type includes a millimeter-wave radar. Correspondingly, the at least one second node includes four millimeter-wave radars. If node performance corresponding to two millimeter-wave radars is that a detection distance is less than a preset value, a node function corresponding to the two millimeter-wave radars is short-range detection. If node performance corresponding to the other two millimeter-wave radars is that a detection distance is greater than the preset value, a node function corresponding to the two millimeter-wave radars is long-distance detection. The first version package corresponding to the attribute information of the at least one second node may include a version package 1, and the version package 1 may be used to update a short-range detection function of the two millimeter-wave radars, and to update a long-range detection function of the two millimeter-wave radars. Alternatively, the first version package corresponding to the attribute information of the at least one second node may include a version package 1 and a version package 2. The version package 1 may be used to update a short-range detection function of the two millimeter-wave radars, and the version package 2 may be used to update a long-range detection function of the two millimeter-wave radars.

**Table 4**

| Attribute information | | | |
|---|---|---|---|
| Quantity of nodes | Node type | Node performance | Node function |
| 2 | Millimeter-wave radar | A detection distance is less than a preset value | Short-range detection |
| 2 | Millimeter-wave radar | A detection distance is greater than the preset value | Long-range detection |

It can be learned from Example 4 that the first version package corresponding to the attribute information of the at least one second node may be used to simultaneously or separately update node functions of second nodes of a same type but with different node performance.

In this embodiment of this application, there are a plurality of implementations in which the first node 101 stores the first version package in the storage of the first node 101, including but not limited to the following implementations:

Implementation 1: The first node 101 may send version package request information to a server 200, where the version package request information is used to request the first version package. The server 200 receives the version package request information, and sends the first version package to the first node 101. The first node 101 stores the first version package in the storage (for example, a flash memory) of the first node 101. In the implementation 1, the first node 101 obtains the first version package by communicating and interacting with the server 200, so that the first node 101 can obtain a first version package updated in real time, and software and/or firmware of the second node 102 can be updated in time.

Implementation 2: The first node 101 may send version package request information to a server 200, where the version package request information is used to request the first version package. After receiving the version package request information, the server 200 directly writes the first version package into the storage of the first node 101. In the implementation 2, the server 200 can directly write the first version package into the storage of the first node 101, so that efficiency of obtaining the first version package by the first node 101 can be effectively improved, to effectively improve efficiency of obtaining the first version package by the second node 101.

It should be noted that the storage configured to store the first version package in the first node 101 is an external storage of the first node 101. When the first node 101 is powered off, data stored in the external storage is not lost. For example, the external storage may be a flash memory.

S702: The first node 101 writes the first version package into a memory of the second node 102.

It may be understood that an example in which the second node 102 is the at least one second node is used. Correspondingly, the first version package corresponds to the attribute information of the second node 102, and the first node 101 may write the first version package into the memory of the second node 102.

A process in which the first node 101 writes the first version package into the memory of the second node 102 is: The first node 101 writes the first version package into storage space corresponding to a target memory address of the second node 102. The first node 101 is implemented by using a remote direct memory access (remote direct memory access, RDMA) technology, so that the second node 102 can quickly obtain the first version package. This effectively improves upgrade efficiency of the second node 102. The target memory address of the second node 102 is obtained by the first node 101 in advance, or is sent by the second node 102 to the first node 101 before the first node 101 writes the first version package into the second node 102. This is not specifically limited in embodiments of this application.

In this embodiment of this application, the "memory of the second node 102" is an internal storage that is in the second node 102 and that directly exchanges data with a processor and has a read/write function. For example, the internal storage may be a RAM. The RAM may be further classified into a static RAM and a dynamic RAM. Correspondingly, the memory of the second node 102 may be a static RAM or a dynamic RAM. This is not specifically limited in embodiments of this application. Correspondingly, the "target memory address" may be understood as a RAM address and/or a RAM identifier that are in the RAM and that are used to store the first version package.

It should be noted that there are a plurality of cases in which the first node 101 writes the first version package into the memory of the second node 102. The possible cases are described below.

Case 1: The first node writes the first version package into the memory of the second node 102 only when determining that the second node 102 is in a started state.

It can be learned from the foregoing descriptions of the "started state" that the second node 102 is in the started state, namely, a state in which the second node 102 is powered on, has established a communication connection to the first node 102, and waits to receive a version package. Therefore, in the case 1, the first node 101 writes the first version package into the second node 102 only when determining that the second node 102 is in the started state. This can effectively improve a probability of successfully writing the first version package into the second node 102.

In a possible implementation, first information may indicate that the second node 102 is in the started state, and then the first node 101 may write the first version package into the memory of the second node 102 based on first information of the second node 102.

It may be understood that the first information may be information sent by the second node 102 to the first node 101, or the first information may be information obtained by the first node 101 in advance. This is not specifically limited in this application. The information obtained in advance may include at least one of a bus type, a communication identifier, or a state memory address of the second node 102. For example, the bus type may be, for example, any one of a GPIO bus, an ETH bus, or a CAN bus; the communication identifier may be any one of a CAN ID, an IP address, a MAC address, or a port number; and the state memory address may be a register address representing a state of the second node 102.

Example 1: The first information is the information sent by the second node 102 to the first node 101.

Specifically, before the first node 101 writes the first version package into the memory of the second node 102, the second node 102 may send the first information to the first node 101, where the first information may indicate that the second node 102 is in the started state. Correspondingly, the first node 101 may receive the first information, and write the first version package into the memory of the second node 102 in response to the first information. In this way, the first node 101 determines the state of the second node 102 by exchanging information with the second node 102, so that the first node 101 determines the state of the second node 102 more accurately.

Example 2: The first information is the information obtained by the first node 101 in advance.

For example, the information obtained in advance includes the state memory address. The first node 101 may read content of the state memory address to determine the state of the second node 102, and write the first version package into the second node 102 when determining that the second node 102 is in the started state.

For another example, the information obtained in advance includes the bus type and the state memory address, and the bus type is the ETH bus. The first node 101 may read content of the state memory address through the ETH bus to determine the state of the second node 102, and write the first version package into the second node 102 when determining that the second node is in the started state.

For another example, the information obtained in advance includes the bus type, the communication identifier, and the state memory address, the bus type is the ETH bus, and the communication identifier is one or more of the IP address, the MAC address, or the port number. In this case, the first node 101 may read, through the ETH bus, content of a state memory address corresponding to one or more of the IP address, the MAC address, or the port number, to determine the state of the second node 102, and write the first version package into the second node 102 when determining that the second node 102 is in the started state.

For another example, the information obtained in advance includes the bus type, the communication identifier, and the state memory address, the bus type is the CAN bus, and the communication identifier is the CAN ID. In this case, the first node 101 may read, through the CAN bus, content of a state memory address corresponding to the CAN ID, to determine the state of the second node 102, and write the first version package into the second node 102 when determining that the second node 102 is in the started state. In this way, the first node 101 can actively read the state of the second node 102, to effectively simplify a process of interaction between the first node 101 and the second node 102.

For another example, the information obtained in advance includes the bus type, the bus type is the GPIO, and the GPIO has only two states: a high level and a low level. Input/output (input/output, IO) interfaces of the first node 101 and the second node 102 are connected through one wire. It is assumed that a default state of the GPIO is the low level, and the second node 102 sets the GPIO to the high level when the second node 102 is in the started state. Correspondingly, the first node 101 may obtain the state of the second node 102 by determining a level state of the GPIO.

Case 2: The first node 101 writes the first version package into the memory of the second node 102 when determining that duration in which the first version package is stored in the storage of the first node 101 exceeds first preset duration.

In the case 2, the first node 101 may perform an operation of writing the first version package into the memory of the second node 102 only when the duration in which the first version package is stored in the storage of the first node 101 exceeds the first preset duration, without a need to obtain a state of the second node 102. In this way, when the second node 102 does not have a communication capability, although the first node 101 cannot obtain the state of the second node 102, the first node 101 can perform the operation of writing the first version package into the memory of the second node 102. This effectively improves a probability of successfully obtaining the first version package by the second node 101.

For example, the first preset duration is 5 minutes. If the first version package is stored in the storage of the first node 101 for 6 minutes, the first node 101 may perform the operation of writing the first version package into the memory of the second node 102.

Optionally, before the first node 101 writes the first version package into the memory of the second node 102, the first node 101 may perform a first operation based on second information of the second node 102. The second information indicates that the second node 102 is in a failed state.

Similarly, the second information may be information sent by the second node 102 to the first node 101, or the second information may be information obtained by the first node 101 in advance. This is not specifically limited in embodiments of this application. The information obtained in advance may include at least one of a bus type, a communication identifier, or a state memory address of the second node 102. For example, the bus type may be, for example, a CAN bus or an ETH bus; the communication identifier may be any one of a CAN ID, an IP address, a MAC address, or a port number; and the state memory address may be an address that is of a specified register and that represents a state of the second node 102.

Example 1: The second information is the information sent by the second node 102 to the first node 101.

Specifically, before the first node 101 writes the first version package into the memory of the second node 102, the second node 102 sends the second information to the first node 101, where the second information indicates that the second node 102 is in the failed state. Correspondingly, the first node 101 may receive the second information, and perform the first operation in response to the second information.

Example 2: The second information is the information obtained by the first node 101 in advance.

For example, the information obtained in advance includes the state memory address. The first node 101 may read content of the state memory address to determine the state of the second node 102, and write the first version package into the second node 102 when determining that the second node 102 is in the failed state.

For another example, the information obtained in advance includes the bus type and the state memory address, and the bus type is the ETH bus. The first node 101 may read content of the state memory address through the ETH bus to determine the state of the second node 102, and perform the first operation when determining that the second node is in the failed state.

For another example, the information obtained in advance includes the bus type, the communication identifier, and the state memory address, the bus type is the ETH bus, and the communication identifier is one or more of the IP address, the MAC address, or the port number. In this case, the first node 101 may read, through the ETH bus, content of a state memory address corresponding to one or more of the IP address, the MAC address, or the port number, to determine the state of the second node 102, and perform the first operation when determining that the second node 102 is in the failed state.

For another example, the information obtained in advance includes the bus type, the communication identifier, and the state memory address, the bus type is the CAN bus, and the communication identifier is the CAN ID. In this case, the first node 101 may read, through the CAN bus, content of a state memory address corresponding to the CAN ID, to determine the state of the second node 102, and perform the first operation when determining that the second node 102 is in the failed state.

In this embodiment of this application, the first operation may include but is not limited to at least one of the following manners:
Manner 1: The first node 101 reports exception information corresponding to the failed state to a controller in the vehicle or a server.

For example, the first node 101 is a sensor 1, the second node 102 is a sensor 2 and a sensor 3, and the controller is an autonomous driving domain controller. If a communication link between the sensor 2 and the sensor 1 is faulty and the sensor 2 is in a failed state, the sensor 1 may report, to the autonomous driving domain controller, exception information corresponding to the failed state of the sensor 2, or the sensor 1 may report, to the server 200, exception information corresponding to the failed state of the sensor 2.

In the manner 1, when the second node 102 is in the failed state, the first node 101 reports exception information corresponding to the failed state to the controller in the vehicle or the server, so that the controller in the vehicle or the server can take a corresponding safety measure in time, to effectively improve driving safety of the vehicle.

Manner 2: The first node 101 controls a prompt apparatus to output prompt information. The prompt information indicates that a first function associated with the second node 102 fails or is degraded.

It may be understood that, in this embodiment of this application, the "prompt apparatus" is an apparatus for outputting the prompt information, and includes but is not limited to at least one of a voice apparatus, an optoelectronic apparatus, or a display apparatus. For example, the prompt apparatus may be, for example, at least one of a vehicle-mounted speaker, an in-vehicle display, or a mobile phone. This is not specifically limited in embodiments of this application. Correspondingly, the "prompt information" may be at least one of voice information, text information, or picture information. This is not specifically limited in embodiments of this application. "Function degradation" may be understood as that a performance parameter of a function of the second node 102 is degraded.

Example 1: The second node 102 is a radar 1 and a radar 2, and functions of the radar 1 and the radar 2 are long-range detection. If the radar 1 is in a failed state, the function of the radar 2 is degraded to short-range detection. Therefore, the prompt information output by the prompt apparatus under the control of the first node 101 may be that "A radar 1 has failed, a function of a radar 2 changes to short-range detection, and/or a detection angle of the radar 2 becomes smaller".

Example 2: The second node 102 is a radar 1, a radar 2, and a camera 3, functions of the radar 1 and the radar 2 are long-range detection, and a function of the camera 3 is target recognition. If the radar 1 and the radar 2 are in a failed state, the target recognition function of the camera 3 is affected, and therefore target reliability of the target recognition function of the camera 3 is reduced. In this case, the prompt information output by the prompt apparatus under the control of the first node 101 may be that "A radar 1 and a radar 2 have failed, and target reliability of a target recognition function of a camera 3 is reduced."

In the manner 2, when the second node 102 is in the failed state, the first node 101 controls the prompt apparatus to output corresponding prompt information, so that a user can perceive a function change of the second node 102, and driving behavior of the vehicle matches the function of the second node 102, to effectively improve driving safety of the vehicle.

Manner 3: The first node 101 adjusts a sensing policy of the vehicle 100.

It may be understood that, in this embodiment of this application, the "sensing policy" may be understood as a manner in which the vehicle 100 senses a target object or an environment. For example, when the second node 102 is a radar and a photographing apparatus, if functions of the radar and the photographing apparatus are intact, the sensing policy may be sensing the target object or the environment by using the radar and the photographing apparatus; or if a function of the radar fails, the sensing policy may be sensing the target object or the environment by using the photographing apparatus.

For example, the first node 101 is an autonomous driving domain controller, and the second node 102 is a sensor 1 and a sensor 2. If a communication link between the sensor 2 and the autonomous driving domain controller is faulty, the sensor 2 is in a failed state. The autonomous driving domain controller may report exception information corresponding to the failed state to the server 200, and the autonomous driving domain controller may further adjust the sensing policy of the vehicle 100. For example, the sensor 1 and the sensor 2 are configured to: detect a long-distance object, adjust a function of the sensor 1 to short-distance detection, and output the prompt information that "Currently, only a sensor 1 is used for short-distance detection".

In the manner 3, when the second node 102 is in the failed state, if the first node 101 is a vehicle-mounted controller, the first node 101 may adjust the sensing policy of the vehicle in time, to effectively improve driving safety of the vehicle.

It should be noted that, after the first node 101 writes the first version package into the memory of the second node 102, all functions of the second node 102 is enabled, so that the second node 102 is capable of sending notification information to the first node 101. Therefore, in a possible implementation, the first node 101 may detect whether the first node receives the notification information from the second node 102 within second preset duration, to determine whether the first node successfully writes the first version package into the memory of the second node 102 and whether the second node 102 successfully executes the first version package. For example, if the first node 101 receives the notification information from the second node 102 within the second preset duration, the notification information indicates that the second node 102 has successfully executed the first version package. Alternatively, if the first node 101 receives no notification information from the second node 102 within the second preset duration, the first node determines that the second node 102 fails to execute the first version package or a communication link between the first node 101 and the second node 102 is faulty.

Example 1: The second preset duration is 3 minutes. After the first node 101 writes the first version package into the memory of the second node 102, if the first node 101 receives the notification information from the second node 102 within 3 minutes, and the notification information indicates that the second node 102 has successfully executed the first version package, the first node 101 may determine that the second node 102 has successfully executed the first version package.

Example 2: The second preset duration is 10 minutes. If the first node 101 receives no notification information from the second node 102 within 10 minutes after the first node 101 writes the first version package into the memory of the second node 102, the first node determines that the second node 102 fails to execute the first version package or a communication link between the first node 101 and the second node 102 is faulty.

S703: The second node 102 performs corresponding processing based on the first version package.

To ensure safety in a process in which the second node 102 starts (that is, software and/or firmware is updated) to execute the first version package, before the second node 102 executes the first version package, the second node 102 needs to decrypt the first version package by using a preset key, and perform integrity and validity check on the first version package. The second node 102 starts to perform corresponding processing based on the first version package only after integrity and validity check of the version package succeeds.

A process in which the second node 102 performs corresponding processing based on the first version package may be: The second node 102 parses content of the first version package, extracts a corresponding code segment, and loads the code segment to a specified running memory. The running memory runs a program corresponding to the code segment, so that a program in the code segment is adapted to a parameter of the second node 102, to complete loading and initialization of a software function and/or firmware of the second node 102.

In the embodiment shown in FIG. 7, the first version package of the second node 102 is stored in the storage of the first node 101, so that the first node 101 can write the first version package into the memory of the second node 102. The memory of the second node 102 is an internal storage that is in the second node 102 and that directly exchanges data with a processor and has a read/write function. Therefore, an external storage may not be disposed in the second node 102 to store the first version package, so that costs of the second node 102 can be effectively reduced. In addition, the second node 102 accesses a memory quickly and the second node 102 receives the first version package by using the memory, so that an upgrade process of a vehicle-mounted component can be effectively simplified, to effectively reduce upgrade duration of the second node 102 (namely, the vehicle-mounted component).

In some possible embodiments, the first version package corresponds to a first function of the second node 102, the first node 101 has a second function, the second function is associated with the first function, and the second function corresponds to a second version package. In this case, the first node 101 may execute the second version package corresponding to the second function.

It may be understood that, in this embodiment of this application, "the second function is associated with the first function" means that implementation of the first function is a necessary condition for implementation of the second function. For example, the second function is an autonomous driving function, the first function is a distance measurement function, and implementation of the distance measurement function is a necessary condition for implementation of the autonomous driving function. In this way, the first node 101 and the second node 102 can jointly implement the second function.

Further, that the first node 101 executes the second version package corresponding to the second function may be: when the second node 102 executes the first version package, the first node 101 executes the second version package corresponding to the second function.

It should be understood that a case in which the second node 102 executes the first version package includes at least one stage of the following: a process in which the second node 102 executes the first version package, before the second node 102 executes the first version package, or after the second node 102 executes the first version package. In other words, before the second node 102 executes the first version package, the first node 101 may execute the second version package corresponding to the second function; in the process in which the second node 102 executes the first version package, the first node 101 may execute the second version package corresponding to the second function; or after the second node 102 executes the first version package, the first node 101 may execute the second version package corresponding to the second function. In this way, the first node 101 and the second node 102 can jointly implement the second function.

For example, the first node 101 is an autonomous driving domain controller, the second node 102 is a sensor, the first function is a distance measurement function of the sensor, the distance measurement function corresponds to the version package 1, the second function is an autonomous driving function of the autonomous driving domain controller, and the autonomous driving domain function corresponds to the version 2. Because implementation of the distance measurement function is a necessary condition for implementation of the autonomous driving function, the autonomous driving domain controller may write the version package 1 into a memory of the sensor, and the autonomous driving domain controller executes the version package 2 when the sensor executes the version package 1. In this way, the autonomous driving domain controller and the sensor can jointly implement the autonomous driving function after the sensor successfully executes the version package 1 and completes initialization of the distance measurement function, and the autonomous driving domain controller successfully executes the version package 2 and completes initialization of the autonomous driving function.

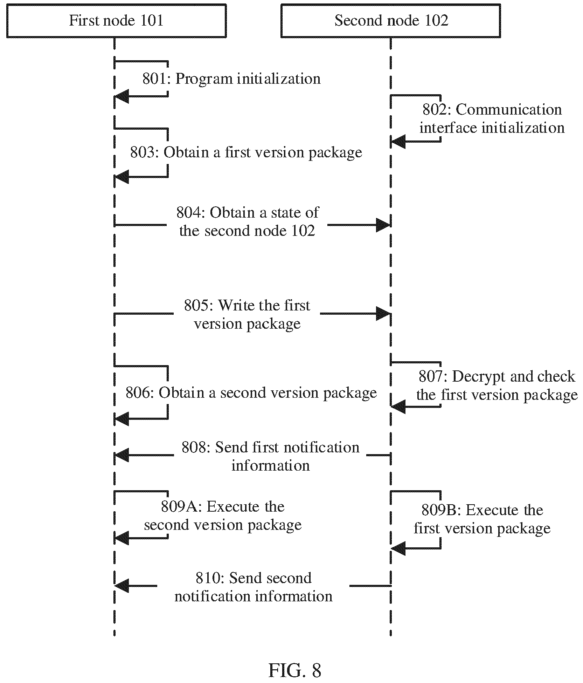

For ease of understanding, FIG. 8 is a schematic flowchart in which the first node 101 and the second node 102 separately execute a version package corresponding to an associated function. The procedure includes the following steps.

801: The first node 101 performs program initialization.

It may be understood that the program initialization performed by the first node 101 includes communication interface initialization and version package management function initialization. The communication interface initialization enables a communication capability of the first node 101, so that the first node 101 may perform step 804 to obtain a state of the second node 102. The version package management function initialization enables a version package obtaining capability and a version package writing capability of the first node 101, so that the first node 101 may perform step 805 or step 806.

802: The second node 102 performs the communication interface initialization.

In a possible implementation, the second node 102 is powered on and runs a ROM, to complete the communication interface initialization and enable a communication capability of the second node 102. Therefore, the second node 102 may set a register flag bit and a target memory address flag bit, or send notification information to the first node 101 through a GPIO bus, an ETH bus, or a CAN bus.

803: The first node 101 obtains a first version package.

It may be understood that the first node 101 may obtain the first version package from an external storage of the first node 101, or may request the first version package from the server 200. This is not specifically limited in embodiments of this application.

804: The first node 101 obtains the state of the second node 102.

For example, when determining that the second node 102 is in a started state, the first node 101 performs step 805.

805: The first node 101 writes the first version package into the second node 102.

806: The first node 101 obtains a second version package.

It may be understood that the first node 101 may obtain the second version package from the external storage of the first node 101, or may request the second version package from the server 200. This is not specifically limited in embodiments of this application.

807: The second node 102 decrypts and checks the first version package.

It should be understood that the second node 102 performs step 808 when successfully decrypting and checking the first version package.

808: The second node 102 sends first notification information. Correspondingly, the first node 101 receives the first notification information.

The first notification information indicates that the first version package is successfully checked.

809A: The first node 101 executes the second version package.

809B: The second node 102 executes the first version package.

In 809A and 809B, when the second node 102 executes the first version package, the first node 101 executes the second version package, so that the first node 101 and the second node 102 can jointly implement a second function.

810: The second node 102 sends second notification information. Correspondingly, the first node 101 receives the second notification information.

The second notification information indicates that the second node 102 has successfully executed the first version package.

In the embodiment shown in FIG. 8, when the second node 102 executes the first version package, the first node 101 executes the second version package, so that the first node 101 and the second node 102 can jointly implement a first function.

In another possible embodiment, when the second node 102 executes the first version package, the first node 101 may further execute another version package associated with the first node 101. This can also simplify an upgrade process of the first node 101 and the second node 102.

In some possible embodiments, the first function may be further associated with the first node 101. To be specific, both the first node 101 and the second node 102 are configured to implement the first function, and the first function corresponds to the first version package. In other words, the first node 101 and the second node 102 share the first version package. Therefore, the first node 101 also executes the first version package.

For example, continue to refer to FIG. 6. The first node 101 is a sensor a1 shown in (a) in FIG. 6. The second node 102 is sensors a2 to aN shown in (a) in FIG. 6. The sensors a1 to aN are configured to implement a distance measurement function, and a first version package corresponding to the distance measurement function is a version package 1. The sensor a1 may write the version package 1 into memories of the sensors a2 to aN. When the sensors a2 to aN execute the version package 1, the sensor a1 also executes the version package 1.

It should be noted that the first version package written by the first node 101 into the second node 102 may be an upgraded version package, or may be a non-upgraded version package.

Case 1: A process of storing the first version package in the storage of the first node 101 in S701 may be as follows: The first node 101 receives a third version package, upgrades the third version package to obtain the first version package, and stores the first version package. In this way, the first version package written by the first node 101 into the second node 102 is the upgraded version package, and the second node 102 does not need to upgrade the first version package. This effectively simplifies the upgrade process of the second node 102. Correspondingly, after receiving the upgraded version package (namely, the first version package), the second node 102 restarts, and directly executes the first version package. In this way, the version package needs to be upgraded on the first node 101 only once, to simplify the upgrade process of the second node 102, so that the second node 102 can effectively improve update efficiency of a software function and/or firmware.

For example, the first node 101 is a sensor 1, and the second node 102 is a sensor 2. The sensor 1 and the sensor 2 are jointly configured to implement an angle measurement function. The sensor 1 upgrades a version package 1 corresponding to the angle measurement function, to obtain a version package 2. The version package 2 is stored in a storage of the sensor 1. The sensor 1 writes the version package 2 into a memory of the sensor 2. The sensor 2 restarts, and executes the version package 2.

Case 2: A process of storing the first version package in the storage of the first node 101 in S701 may be as follows: After receiving a third version package, the first node 101 may directly store the third version package in the storage of the first node 101 as the first version package, and directly write the first version package into a memory of the second node 102. The second node 102 starts Runtime (Runtime) to upgrade the first version package, and then executes the first version package.

For example, the first node 101 is a domain controller 1, and the second node 102 is a sensor 2. The sensor 2 may be configured to implement an angle measurement function. After obtaining a version package corresponding to the angle measurement function, the domain controller 1 stores the version package locally, and writes the version package into a memory of the sensor 2. When the sensor 2 starts runtime (Runtime), the sensor 2 upgrades the version package, and then executes the version package.

In some possible embodiments, the first node 101 may further receive an upgrade request from a domain controller or a vehicle domain controller, and determine, in response to the upgrade request, whether software and/or firmware of the first node 101 need to be upgraded or software and/or firmware of the second node 102 need to be upgraded. If the software and/or the firmware of the first node 101 need to be upgraded, the first node 101 executes a corresponding version package to complete upgrade of the software and/or the firmware of the first node 101. If the software and/or the firmware of the second node 102 need to be upgraded, the first node 101 writes a corresponding version package into the memory of the second node 102, so that the second node 102 executes the version package and completes upgrade of the software and/or the firmware of the second node 102.

An example of this application not forming part of the invention further provides another information processing method. The method may be applied to a second node 102, and the method includes:

S901: The second node 102 runs a ROM to write a first version package into a memory of the second node 102, where the first version package corresponds to attribute information of the second node.

In a possible implementation, the second node 102 runs preset code in the ROM to request the first version package from a server 200, and writes the first version package into the ROM.

S902: The second node 102 performs corresponding processing based on the first version package.

To ensure upgrade safety of the second node 102, before the second node 102 executes the first version package, the second node 102 needs to decrypt the first version package by using a preset key, and perform integrity and validity check on the first version package. The second node 102 starts to perform corresponding processing based on the first version package only after integrity and validity check of the version package succeeds.

A process in which the second node 102 performs corresponding processing based on the first version package may be: The second node 102 parses content of the first version package, extracts a corresponding code segment, and loads the code segment to a specified running memory. A processor runs a program corresponding to the code segment, so that a program in the code segment is adapted to a parameter of the second node 102, to complete update of a software function and/or firmware of the second node 102.

It may be understood that the memory of the second node 102 is an internal storage (for example, a RAM) that is in the second node 102 and that directly exchanges data with a processor and has a read/write function. Therefore, in this example of this application, the second node needs to run the read-only memory ROM to write the first version package into the memory of the second node, and the second node may obtain the first version package by running the read-only memory, so that an upgrade process of a vehicle-mounted component is effectively simplified, to effectively reduce upgrade duration of the second node (namely, the vehicle-mounted component).

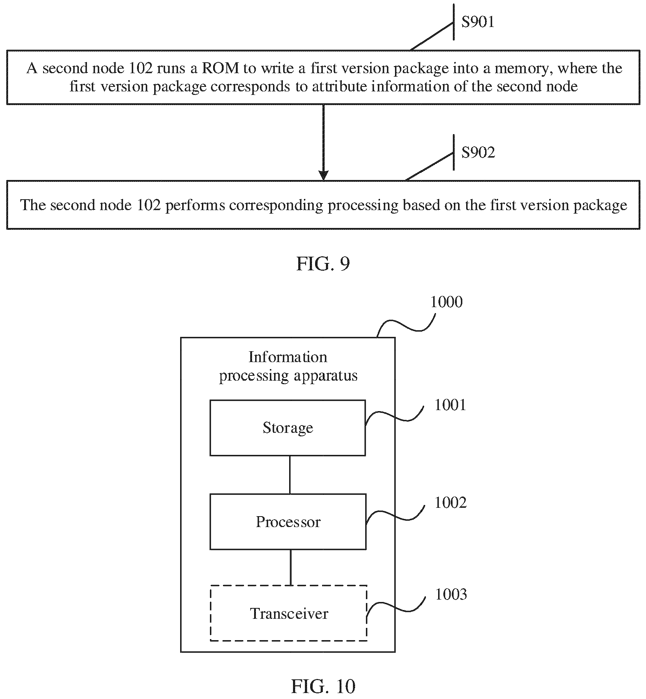

Based on the foregoing embodiments and a same technical concept, an embodiment of this application further provides an information processing apparatus, configured to perform steps performed by the first node 101 in the foregoing method embodiments. For related features, refer to the foregoing method embodiments. Details are not described herein again. As shown in FIG. 10, the information processing apparatus 1000 includes:
a storage 1001, configured to store a first version package, where the first version package corresponds to attribute information of at least one second node; and
a processor 1002, configured to control writing of the first version package into a memory of the at least one second node.

It may be understood that the storage 1001 may be an external storage of the information processing apparatus 1000, for example, a flash memory.

The attribute information includes one or more of a node function, a node location, a quantity of nodes, a node type, or node performance.

The processor 1002 is specifically configured to write the first version package into storage space corresponding to a target memory address of the at least one second node.

In a possible implementation, the first version package corresponds to a first function of the at least one second node, and a second function is associated with the first function. The processor 1002 is further configured to execute a second version package corresponding to the second function. Optionally, the processor 1002 is specifically configured to execute the second version package when the at least one second node executes the first version package.

Optionally, if the first node is any node in the at least one second node, the processor 1002 may be further configured to execute the first version package.

Optionally, the apparatus 1000 further includes a transceiver 1003. Before the first version package is stored in the storage 1001, the transceiver 1003 may be configured to receive a third version package, so that the processor 1002 may be further configured to upgrade the third version package to obtain the first version package.

It may be understood that the transceiver 1003 may be understood as a communication interface, and the communication interface has a function of receiving information from another apparatus or sending information to another apparatus, for example, receiving the third version package. There are a plurality of implementations in which the processor 1002 writes the first version package into the memory of the at least one second node:

Implementation 1: The processor 1002 may control, based on first information of the at least one second node, writing of the first version package into the memory of the at least one second node, where the first information indicates that the at least one second node is in a started state.

Implementation 2: When determining that duration in which the first version package is stored in the storage of the first node exceeds first preset duration, the processor 1002 may control writing of the first version package into the memory of the at least one second node.

In a possible implementation, the processor 1002 may further perform a first operation based on second information of the at least one second node. The second information may indicate that the at least one second node is in a failed state. The first operation includes at least one of the following: reporting exception information corresponding to the failed state to a controller in a vehicle or a server; controlling a prompt apparatus to output prompt information, where the prompt information indicates that a function of the at least one second node fails or is degraded; and adjusting a sensing policy of a vehicle, where the sensing policy indicates a manner in which the vehicle senses a target object or an environment.

In a possible implementation, the transceiver 1003 may further receive notification information from the at least one second node within second preset duration, where the notification information may indicate that the at least one second node has successfully executed the first version package. Alternatively, when determining that the transceiver 1003 receives no notification information from the at least one second node within second preset duration, the processor 1002 may further determine that the at least one second node fails to execute the first version package or a communication link between the first node and the at least one second node is faulty.

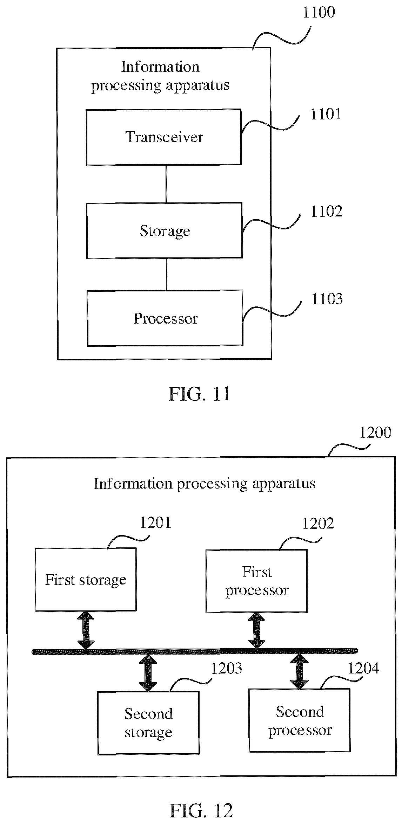

FIG. 11 shows another information processing apparatus according to an embodiment of this application. The apparatus may be configured to implement the method performed by the second node 102. For example, the apparatus 1100 may include:
a transceiver 1101, configured to receive, by using a memory, a first version package written by a first node, where the first version package corresponds to attribute information of a second node;
a storage 1102, configured to store the first version package; and
a processor 1103, configured to perform corresponding processing based on the first version package.

It may be understood that the transceiver 1101 may be understood as a communication interface, and the communication interface has a function of receiving information from another apparatus or sending information to another apparatus, for example, receiving the first version package by using the memory. Herein, the storage 1102 is an internal storage (for example, a RAM) that directly exchanges data with the processor 1103 and has a read/write function in the information processing apparatus 1100.

In a possible implementation, the transceiver 1101 may further send notification information to the first node. The notification information may indicate that the second node has successfully executed the first version package.

The processor 1103 may perform restarting, and execute the first version package.

FIG. 12 shows another information processing apparatus according to an example not forming part of the invention. The apparatus may be configured to implement the method performed by the second node 102 in the embodiment shown in FIG. 9.

For example, the apparatus 1200 may include:
a first storage 1201, configured to store program code corresponding to a first instruction, where the first instruction is used to write a first version package into a memory of a second node, and the first version package corresponds to attribute information of the second node;
a first processor 1202, configured to run the program code to write the first version package into the memory of the second node;
a second storage 1203, configured to store the first version package; and
a second processor 1204, configured to perform corresponding processing based on the first version package.

It may be understood that the first processor 1202 and the second processor 1204 may be processors independent of each other, or may be different functional modules of a function-integrated processor. This is not specifically limited in embodiments of this application. Herein, the first storage 1201 is an internal storage (for example, a ROM) that is in the information processing apparatus 1200 and that is used for fixing the program code, and may directly exchange data with the first processor 1202 or the second processor 1204. The second storage 1203 is an internal storage (for example, a RAM) that is in the information processing apparatus 1200 and that directly exchanges data with the first processor 1202 or the second processor 1204 and has a read/write function.

An embodiment of this application further provides a terminal device. The terminal device may include the information processing apparatus 1000, or may include the information processing apparatus 1100, or may include the information processing apparatus 1200.

It should be noted that the terminal in this embodiment of this application may be, for example, a vehicle or another apparatus in the vehicle. The another apparatus includes but is not limited to another sensor like a vehicle-mounted terminal, a vehicle-mounted controller, an in-vehicle module, an automobile module, a vehicle-mounted component, an in-vehicle chip, an in-vehicle unit, a vehicle-mounted radar, or a vehicle-mounted camera. The vehicle may implement the method provided in this application by using the vehicle-mounted terminal, the vehicle-mounted controller, the in-vehicle module, the automobile module, the vehicle-mounted component, the in-vehicle chip, the in-vehicle unit, the vehicle-mounted radar, or the vehicle-mounted camera. Certainly, the terminal may alternatively be another intelligent terminal other than the vehicle, or a component disposed in another intelligent terminal other than the vehicle. The intelligent terminal may be an intelligent transportation device, a smart home device, or a robot. For example, the intelligent terminal includes but is not limited to an intelligent terminal or a controller in the intelligent terminal, a chip, another sensor like a radar or a camera, another component, and the like.

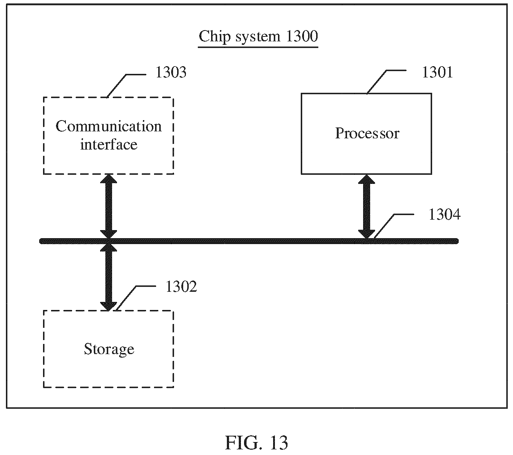

An embodiment of this application further provides a chip system. Refer to FIG. 13. The chip system 1300 includes at least one processor. When a program instruction is executed in at least one processor 1301, the information processing method in the embodiment shown in FIG. 7 or the information processing method in the embodiment shown in FIG. 9 can be implemented.

Optionally, the chip system further includes a communication interface 1303, and the communication interface is configured to input or output information.

Optionally, the chip system further includes a storage 1302. The storage 1302 is coupled to the processor through the communication interface 1303, and is configured to store the instruction, so that the processor reads, through the communication interface 1303, the instruction stored in the storage.

It should be understood that connection media between the processor 1301, the storage 1302, and the communication interface 1303 are not limited in embodiments of this application. In this embodiment of this application, in FIG. 13, the storage 1302, the processor 1301, and the communication interface 1303 are connected through a communication bus 1304. The bus is represented by using a thick line in FIG. 13. A connection manner between other components is merely an example for description, and is not limited. The bus may include an address bus, a data bus, a control bus, and the like. For ease of representation, only one thick line is used to represent the bus in FIG. 13, but this does not mean that there is only one bus, only one type of bus, or the like.

The foregoing receiving/sending module (transceiving module) may be an interface circuit of an apparatus, and is configured to receive a signal from another apparatus, or send a signal to another apparatus. For example, when the apparatus is implemented in a manner of a chip, the transceiver unit is an interface circuit that is of the chip and that is configured to receive a signal from another chip or apparatus, or send a signal to another chip or apparatus.

An embodiment of this application further provides a computer program product including instructions. When the computer program product runs on the foregoing apparatus, the information processing method in the foregoing embodiment is performed.

An embodiment of this application provides a computer-readable storage medium. The computer-readable storage medium stores a computer program. When the computer program is run, the information processing method in the foregoing embodiment is implemented.

For example, the module or unit division is merely logical function division, and there may be another division manner during actual implementation. For example, a plurality of units or components may be combined or integrated into another apparatus, or some features may be ignored or not performed. In addition, the displayed or discussed mutual couplings or direct couplings or communication connections may be implemented based on some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

All or some of the methods in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, briefly referred to as DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

A person skilled in the art can make various modifications and variations to this application without departing from the scope of this application. This application is intended to cover these modifications and variations of this application provided that they fall within the scope of the claims of this application. The scope of this application is therefore defined by the scope of the claims.

## Claims

1. An information processing method, wherein the method comprises:
storing (S701) a first version package in a non-volatile storage of a first node (101), wherein the first version package corresponds to attribute information of at least one second node (102); and
writing (S702, 805), by the first node, the first version package into a volatile memory of the at least one second node;
wherein the first node is a first vehicle-mounted component and the at least one second node is at least one second vehicle-mounted component;
the information processing method **characterised in that** the writing, by the first node, the first version package into a volatile memory of the at least one second node comprises:
writing, by the first node, using a remote direct memory access technology, the first version package into storage space corresponding to a target memory address of the at least one second node;
wherein the target memory address of the at least one second node is obtained by the first node in advance, or is sent by the at least one second node to the first node before the first node writes the first version package into the at least one second node.

2. The method according to claim 1, wherein the attribute information comprises one or more of a node function, a node location, a quantity of nodes, a node type, or node performance.

3. The method according to claim 1 or claim 2, wherein the first version package corresponds to a first function of the at least one second node (102), and the method further comprises:
executing (809A), by the first node (101), a second version package corresponding to a second function, wherein the second function is associated with the first function.

4. The method according to claim 3, wherein the executing (809A), by the first node (101), a second version package corresponding to a second function comprises:
when the at least one second node executes the first version package, executing, by the first node, the second version package.

5. The method according to any one of claims 1 to 4, wherein the first node (101) is any node in the at least one second node (102), and the method further comprises:
executing (809B), by the first node, the first version package.

6. The method according to any one of claims 1 to 5, wherein the storing (S701) a first version package in a storage of a first node (101) comprises:
receiving, by the first node, a third version package;
upgrading, by the first node, the third version package to obtain the first version package; and
storing, by the first node, the first version package.

7. The method according to any one of claims 1 to 6, wherein before the writing (702, 805), by the first node (101), the first version package into a memory of the at least one second node (102), the method further comprises:
writing, by the first node, the first version package into the memory of the at least one second node based on first information of the at least one second node, wherein the first information indicates that the at least one second node is in a started state.

8. The method according to any one of claims 1 to 6, wherein before the writing (702, 805), by the first node (101), the first version package into a memory of the at least one second node (102), the method further comprises:
performing, by the first node, a first operation based on second information of the at least one second node, wherein the second information indicates that the at least one second node is in a failed state; and
the first operation comprises at least one of the following:
reporting exception information corresponding to the failed state to a controller in a vehicle or a server;
controlling a prompt apparatus to output prompt information, wherein the prompt information indicates that a function of the at least one second node fails or is degraded; or
adjusting a sensing policy of a vehicle (100), wherein the sensing policy indicates a manner in which the vehicle senses a target object or an environment.

9. The method according to any one of claims 1 to 6, wherein the writing (702, 805), by the first node (101), the first version package into a memory of the at least one second node (102) comprises:
when determining that duration in which the first version package is stored in the storage of the first node exceeds first preset duration, writing, by the first node, the first version package into the memory of the at least one second node.

10. The method according to any one of claims 1 to 9, wherein the method further comprises:
receiving (808), by the first node (101) within second preset duration, notification information from the at least one second node (102), wherein the notification information indicates that the at least one second node has successfully executed the first version package; or
when receiving no notification information from the at least one second node within second preset duration, determining, by the first node, that the at least one second node fails to execute the first version package or a communication link between the first node and the at least one second node is faulty.

11. An information processing apparatus (1200), wherein the apparatus comprises:
a first storage (1201), configured to store program code corresponding to a first instruction, wherein the first instruction is used to write a first version package into a volatile memory of a second node (102), and the first version package corresponds to attribute information of the second node;
a first processor (1202), configured to run the program code to write, using a remote direct memory access technology, the first version package into the volatile memory of the second node;
a second non-volatile storage (1203), configured to store the first version package; and
a second processor (1204), configured to perform corresponding processing based on the first version package;
wherein the information processing apparatus is a first vehicle-mounted component and the second node is a second vehicle-mounted component;
the information processing apparatus **characterised in that** the first instruction causes the first processor to write the first version package into storage space corresponding to a target memory address of the second node;
wherein the target memory address of the second node is obtained by the first processor in advance, or is sent by the second node to the first processor before the first processor writes the first version package into the second node.

12. A computer-readable storage medium (1001, 1102, 1201) storing a computer program, wherein when the computer program is run by a first node (101), the first node performs the method of any one of claims 1 to 10.

## Patentansprüche

1. Informationsverarbeitungsverfahren, wobei das Verfahren Folgendes umfasst:
Speichern (S701) eines ersten Versionspakets in einer nichtflüchtigen Speicherung eines ersten Knotens (101), wobei das erste Versionspaket Attributinformationen mindestens eines zweiten Knotens (102) entspricht; und
Schreiben (S702, 805), durch den ersten Knoten, des ersten Versionspakets in einen flüchtigen Speicher des mindestens einen zweiten Knotens;
wobei der erste Knoten eine erste fahrzeugmontierte Komponente ist und der mindestens eine zweite Knoten mindestens eine zweite fahrzeugmontierte Komponente ist;
wobei das Informationsverarbeitungsverfahren **dadurch gekennzeichnet ist, dass** das Schreiben, durch den ersten Knoten, des ersten Versionspakets in einen flüchtigen Speicher des mindestens einen zweiten Knotens Folgendes umfasst:
Schreiben durch den ersten Knoten, unter Verwendung einer Fern-Direktspeicherzugriffstechnologie, des ersten Versionspakets in einen Speicherraum, der einer Zielspeicheradresse des mindestens einen zweiten Knotens entspricht;
wobei die Zielspeicheradresse des mindestens einen zweiten Knotens durch den ersten Knoten im Voraus erhalten wird oder durch den mindestens einen zweiten Knoten an den ersten Knoten gesendet wird, bevor der erste Knoten das erste Versionspaket in den mindestens einen zweiten Knoten schreibt.

2. Verfahren nach Anspruch 1, wobei die Attributinformationen eine Knotenfunktion und/oder einen Knotenort und/oder eine Anzahl von Knoten und/oder einen Knotentyp und/oder eine Knotenleistung umfassen.

3. Verfahren nach Anspruch 1 oder Anspruch 2, wobei das erste Versionspaket einer ersten Funktion des mindestens einen zweiten Knotens (102) entspricht und das Verfahren ferner Folgendes umfasst:
Ausführen (809A), durch den ersten Knoten (101), eines zweiten Versionspakets, das einer zweiten Funktion entspricht, wobei die zweite Funktion mit der ersten Funktion assoziiert ist.

4. Verfahren nach Anspruch 3, wobei das Ausführen (809A), durch den ersten Knoten (101), eines zweiten Versionspakets, das einer zweiten Funktion entspricht, Folgendes umfasst:
wenn der mindestens eine zweite Knoten das erste Versionspaket ausführt, Ausführen, durch den ersten Knoten, des zweiten Versionspakets.

5. Verfahren nach einem der Ansprüche 1 bis 4, wobei der erste Knoten (101) ein beliebiger Knoten in dem mindestens einen zweiten Knoten (102) ist und das Verfahren ferner Folgendes umfasst:
Ausführen (809B), durch den ersten Knoten, des ersten Versionspakets.

6. Verfahren nach einem der Ansprüche 1 bis 5, wobei das Speichern (S701) eines ersten Versionspakets in einer Speicherung eines ersten Knotens (101) Folgendes umfasst:
Empfangen, durch den ersten Knoten, eines dritten Versionspakets;
Aktualisieren, durch den ersten Knoten, des dritten Versionspakets, um das erste Versionspaket zu erhalten; und
Speichern, durch den ersten Knoten, des ersten Versionspakets.

7. Verfahren nach einem der Ansprüche 1 bis 6, wobei das Verfahren vor dem Schreiben (702, 805), durch den ersten Knoten (101), des ersten Versionspakets in einen Speicher des mindestens einen zweiten Knotens (102) ferner Folgendes umfasst:
Schreiben, durch den ersten Knoten, des ersten Versionspakets in den Speicher des mindestens einen zweiten Knotens basierend auf ersten Informationen des mindestens einen zweiten Knotens, wobei die ersten Informationen angeben, dass sich der mindestens eine zweite Knoten in einem gestarteten Zustand befindet.

8. Verfahren nach einem der Ansprüche 1 bis 6, wobei das Verfahren vor dem Schreiben (702, 805), durch den ersten Knoten (101), des ersten Versionspakets in einen Speicher des mindestens einen zweiten Knotens (102) ferner Folgendes umfasst:
Durchführen, durch den ersten Knoten, einer ersten Operation basierend auf zweiten Informationen des mindestens einen zweiten Knotens, wobei die zweiten Informationen angeben, dass sich der mindestens eine zweite Knoten in einem ausgefallenen Zustand befindet; und
die erste Operation mindestens eines der Folgenden umfasst:
Melden von Ausnahmeinformationen, die dem ausgefallenen Zustand entsprechen, an eine Steuerung in einem Fahrzeug oder einem Server;
Steuern einer Prompt-Einrichtung zum Ausgeben von Prompt-Informationen, wobei die Prompt-Informationen angeben, dass eine Funktion des mindestens einen zweiten Knotens ausfällt oder beeinträchtigt ist; oder
Anpassen einer Erfassungsrichtlinie eines Fahrzeugs (100), wobei die Erfassungsrichtlinie eine Art und Weise angibt, auf die das Fahrzeug ein Zielobjekt oder eine Umgebung erfasst.

9. Verfahren nach einem der Ansprüche 1 bis 6, wobei das Schreiben (702, 805), durch den ersten Knoten (101), des ersten Versionspakets in einen Speicher des mindestens einen zweiten Knotens (102) Folgendes umfasst:
wenn bestimmt wird, dass eine Dauer, in der das erste Versionspaket in der Speicherung des ersten Knotens gespeichert wird, eine erste voreingestellte Dauer überschreitet, Schreiben, durch den ersten Knoten, des ersten Versionspakets in den Speicher des mindestens einen zweiten Knotens.

10. Verfahren nach einem der Ansprüche 1 bis 9, wobei das Verfahren ferner Folgendes umfasst:
Empfangen (808), durch den ersten Knoten (101) innerhalb einer zweiten voreingestellten Dauer, von Benachrichtigungsinformationen von dem mindestens einen zweiten Knoten (102), wobei die Benachrichtigungsinformationen angeben, dass der mindestens eine zweite Knoten das erste Versionspaket erfolgreich ausgeführt hat; oder
wenn innerhalb einer zweiten voreingestellten Dauer keine Benachrichtigungsinformationen von dem mindestens einen zweiten Knoten empfangen werden, Bestimmen, durch den ersten Knoten, dass der mindestens eine zweite Knoten das erste Versionspaket nicht ausführt oder eine Kommunikationsverbindung zwischen dem ersten Knoten und dem mindestens einen zweiten Knoten fehlerhaft ist.

11. Informationsverarbeitungseinrichtung (1200), wobei die Einrichtung Folgendes umfasst:
eine erste Speicherung (1201), die dazu ausgelegt ist, einen Programmcode zu speichern, der einer ersten Anweisung entspricht, wobei die erste Anweisung dazu verwendet wird, ein erstes Versionspaket in einen flüchtigen Speicher eines zweiten Knotens (102) zu schreiben und das erste Versionspaket Attributinformationen des zweiten Knotens entspricht;
einen ersten Prozessor (1202), der dazu ausgelegt ist, den Programmcode auszuführen, um unter Verwendung einer Fern-Direktspeicherzugriffstechnologie das erste Versionspaket in den flüchtigen Speicher des zweiten Knotens zu schreiben;
einen zweiten nichtflüchtigen Speicher (1203), der dazu ausgelegt ist, das erste Versionspaket zu speichern; und
einen zweiten Prozessor (1204), der dazu ausgelegt ist, eine entsprechende Verarbeitung basierend auf dem ersten Versionspaket durchzuführen;
wobei die Informationsverarbeitungseinrichtung eine erste fahrzeugmontierte Komponente ist und der zweite Knoten eine zweite fahrzeugmontierte Komponente ist;
wobei die Informationsverarbeitungseinrichtung **dadurch gekennzeichnet ist, dass** die erste Anweisung bewirkt, dass der erste Prozessor das erste Versionspaket in einen Speicherraum schreibt, der einer Zielspeicheradresse des zweiten Knotens entspricht;
wobei die Zielspeicheradresse des zweiten Knotens durch den ersten Prozessor im Voraus erhalten wird oder durch den zweiten Knoten an den ersten Prozessor gesendet wird, bevor der erste Prozessor das erste Versionspaket in den zweiten Knoten schreibt.

12. Computerlesbares Speicherungsmedium (1001, 1102, 1201), das ein Computerprogramm speichert, wobei, wenn das Computerprogramm durch einen ersten Knoten (101) ausgeführt wird, der erste Knoten das Verfahren nach einem der Ansprüche 1 bis 10 durchführt.

## Revendications

1. Procédé de traitement d'informations, le procédé comprenant :
le stockage (S701) d'un premier paquet logiciel de version dans un dispositif de stockage non volatil d'un premier nœud (101), le premier paquet logiciel de version correspondant à des informations d'attribut d'au moins un deuxième nœud (102) ; et
l'écriture (S702, 805), par le premier nœud, du premier paquet logiciel de version dans une mémoire volatile de l'au moins un deuxième nœud ;
le premier nœud étant un premier composant embarqué dans un véhicule et l'au moins un deuxième nœud étant au moins un deuxième composant embarqué dans un véhicule ;
le procédé de traitement d'informations étant **caractérisé en ce que** l'écriture, par le premier nœud, du premier paquet logiciel de version dans une mémoire volatile de l'au moins un deuxième nœud comprend :
l'écriture, par le premier nœud, au moyen d'une technologie d'accès direct à la mémoire à distance, du premier paquet logiciel de version dans un espace de stockage correspondant à une adresse mémoire cible de l'au moins un deuxième nœud ;
l'adresse mémoire cible de l'au moins un deuxième nœud étant obtenue par le premier nœud à l'avance, ou étant envoyée par l'au moins un deuxième nœud au premier nœud avant que le premier nœud n'écrive le premier paquet logiciel de version dans l'au moins un deuxième nœud.

2. Procédé selon la revendication 1, dans lequel les informations d'attribut comprennent un ou plusieurs éléments parmi une fonction de nœud, une localisation de nœud, une quantité de nœuds, un type de nœud, ou des performances de nœud.

3. Procédé selon la revendication 1 ou la revendication 2, le premier paquet logiciel de version correspondant à une première fonction de l'au moins un deuxième nœud (102), et le procédé comprenant en outre :
l'exécution (809A), par le premier nœud (101), d'un deuxième paquet logiciel de version correspondant à une deuxième fonction, la deuxième fonction étant associée à la première fonction.

4. Procédé selon la revendication 3, dans lequel l'exécution (809A), par le premier nœud (101), d'un deuxième paquet logiciel de version correspondant à une deuxième fonction comprend :
lorsque l'au moins un deuxième nœud exécute le premier paquet logiciel de version, l'exécution, par le premier nœud, du deuxième paquet logiciel de version.

5. Procédé selon l'une quelconque des revendications 1 à 4, le premier nœud (101) étant un nœud quelconque parmi l'au moins un deuxième nœud (102), et le procédé comprenant en outre :
l'exécution (809B), par le premier nœud, du premier paquet logiciel de version.

6. Procédé selon l'une quelconque des revendications 1 à 5, dans lequel le stockage (S701) d'un premier paquet logiciel de version dans un dispositif de stockage d'un premier nœud (101) comprend :
la réception, par le premier nœud, d'un troisième paquet logiciel de version ;
la mise à niveau, par le premier nœud, du troisième paquet logiciel de version afin d'obtenir le premier paquet logiciel de version ; et
le stockage, par le premier nœud, du premier paquet logiciel de version.

7. Procédé selon l'une quelconque des revendications 1 à 6, le procédé comprenant en outre, avant l'écriture (702, 805), par le premier nœud (101), du premier paquet logiciel de version dans une mémoire de l'au moins un deuxième nœud (102) :
l'écriture, par le premier nœud, du premier paquet logiciel de version dans la mémoire de l'au moins un deuxième nœud sur la base de premières informations de l'au moins un deuxième nœud, les premières informations indiquant que l'au moins un deuxième nœud est dans un état démarré.

8. Procédé selon l'une quelconque des revendications 1 à 6, le procédé comprenant en outre, avant l'écriture (702, 805), par le premier nœud (101), du premier paquet logiciel de version dans une mémoire de l'au moins un deuxième nœud (102) :
la réalisation, par le premier nœud, d'une première opération sur la base de deuxièmes informations de l'au moins un deuxième nœud, les deuxièmes informations indiquant que l'au moins un deuxième nœud est dans un état défaillant ; et
la première opération comprenant au moins l'un des éléments suivants :
le signalement, à un contrôleur dans un véhicule ou à un serveur, d'informations d'exception correspondant à l'état défaillant ;
la commande d'un appareil d'indication afin de fournir des informations d'indication, les informations d'indication indiquant une défaillance ou une dégradation d'une fonction de l'au moins un deuxième nœud ; ou
l'ajustement d'une politique de détection d'un véhicule (100), la politique de détection indiquant une modalité de détection d'un objet cible ou d'un environnement par le véhicule.

9. Procédé selon l'une quelconque des revendications 1 à 6, dans lequel l'écriture (702, 805), par le premier nœud (101), du premier paquet logiciel de version dans une mémoire de l'au moins un deuxième nœud (102) comprend :
lorsqu'il est déterminé qu'une durée pendant laquelle le premier paquet logiciel de version est stocké dans le dispositif de stockage du premier nœud dépasse une première durée prédéfinie, l'écriture, par le premier nœud, du premier paquet logiciel de version dans la mémoire de l'au moins un deuxième nœud.

10. Procédé selon l'une quelconque des revendications 1 à 9, le procédé comprenant en outre :
la réception (808), par le premier nœud (101) au cours d'une deuxième durée prédéfinie, d'informations de notification en provenance de l'au moins un deuxième nœud (102), les informations de notification indiquant que l'au moins un deuxième nœud a exécuté avec succès le premier paquet logiciel de version ; ou
lorsqu'aucune information de notification n'est reçue en provenance de l'au moins un deuxième nœud au cours d'une deuxième durée prédéfinie, la détermination, par le premier nœud, que l'au moins un deuxième nœud ne parvient pas à exécuter le premier paquet logiciel de version ou qu'une liaison de communication entre le premier nœud et l'au moins un deuxième nœud est défectueuse.

11. Appareil de traitement d'informations (1200), l'appareil comprenant :
un premier dispositif de stockage (1201), configuré pour stocker un code de programme correspondant à une première instruction, la première instruction étant utilisée pour écrire un premier paquet logiciel de version dans une mémoire volatile d'un deuxième nœud (102), et le premier paquet logiciel de version correspondant à des informations d'attribut du deuxième nœud ;
un premier processeur (1202), configuré pour exécuter le code de programme afin d'écrire, au moyen d'une technologie d'accès à la mémoire à distance, le premier paquet logiciel de version dans la mémoire volatile du deuxième nœud ;
un deuxième dispositif de stockage non volatil (1203), configuré pour stocker le premier paquet logiciel de version ; et
un deuxième processeur (1204), configuré pour réaliser un traitement correspondant sur la base du premier paquet logiciel de version ;
l'appareil de traitement d'informations étant un premier composant embarqué dans un véhicule et le deuxième nœud étant un deuxième composant embarqué dans un véhicule ;
l'appareil de traitement d'informations étant **caractérisé en ce que** la première instruction amène le premier processeur à écrire le premier paquet logiciel de version dans un espace de stockage correspondant à une adresse mémoire cible du deuxième nœud ;
l'adresse mémoire cible du deuxième nœud étant obtenue par le premier processeur à l'avance, ou étant envoyée par le deuxième nœud au premier processeur avant que le premier processeur n'écrive le premier paquet logiciel de version dans le deuxième nœud.

12. Support de stockage lisible par ordinateur (1001, 1102, 1201) stockant un programme d'ordinateur, lequel programme d'ordinateur, lorsqu'il est exécuté par un premier nœud (101), amène le premier nœud à réaliser le procédé selon l'une quelconque des revendications 1 à 10.
